**Europäisches Patentamt**

(19) **European Patent Office**

**Office européen des brevets**

(11) Veröffentlichungsnummer: **0 023 532**
**B1**

(12) # EUROPÄISCHE PATENTSCHRIFT

(45) Veröffentlichungstag der Patentschrift:
**27.07.83**

(51) Int. Cl.³: **G 01 S 7/02,** H 05 K 5/06,
H 05 K 7/20

(21) Anmeldenummer: **80101789.8**

(22) Anmeldetag: **03.04.80**

(54) **Radar-Sender-Einheit.**

(30) Priorität: **07.08.79 CH 7228/79**

(43) Veröffentlichungstag der Anmeldung:
**11.02.81 Patentblatt 81/6**

(45) Bekanntmachung des Hinweises auf die Patenterteilung:
**27.07.83 Patentblatt 83/30**

(84) Benannte Vertragsstaaten:
**BE DE FR GB IT NL**

(56) Entgegenhaltungen:
**DE-B-2 532 543**
**US-A-3 851 221**
**US-A-3 858 090**

(73) Patentinhaber: **SIEMENS-ALBIS**
**AKTIENGESELLSCHAFT, EGA1/Verträge und Patente**
**Postfach, CH-8047 Zürich (CH)**

(72) Erfinder: **Neher, Karl, Mutschellenstrasse 27,**
**CH-8002 Zürich (CH)**

## Radar-Sender-Einheit

Die Erfindung betrifft den Aufbau einer Radar-Sender-Einheit gemäß dem Oberbegriff des Anspruchs 1.

Bei Radar-Sender-Einheiten sind spezielle Maßnahmen zur Kühlung, Abschirmung und Überwachung des Senders erforderlich, wobei die thermische Belastung des Senders und der weiteren, zum Betrieb der gesamten Anlage erforderlichen Geräte innerhalb zulässiger Grenzen bleiben muß.

Aus der DE-AS 2 532 543 ist eine mechanisch und elektrisch autonome, aus modularen Baugruppen aufgebaute Radar-Sender-Einheit bekannt, die eine Senderöhre, einen gekühlten Modulator und ein Hochspannungsversorgungsgerät aufweist. In dieser Einheit dient eine Grundplatte mit Luftdurchlaßöffnungen als Basis für die Modulatorbaugruppe, in der der mit Kühlrippen versehene Modulator von einem zylinderartigen Blechkörper derart umschlossen ist, daß die Kühlrippen mit den Wänden des Blechkörpers Luftkanäle bilden und an die die Senderöhre seitlich angebaut ist. Dabei ist die durch die Modulatorbaugruppe gebildete Anordnung zur Konvektionskühlung der gesamten Sendereinheit oder mindestens von Baugruppen der Sendereinheit eingesetzt. Eine solche autonome Radar-Sender-Einheit kann zweckmäßigerweise in einem gepanzerten Kettenfahrzeug eingebaut werden.

Es ist ferner aus der CH-PS 424 970 bekannt, in einem ölgekapselten elektrischen Gerät Formschalen sowohl gegen eine Spule als auch gegen einen Kern in Abstand zu halten, so daß je ein Zwischenraum zwischen den Formschalen und der Spule und zwischen den Formschalen und dem Kern entsteht.

Solche Maßnahmen zur Kühlung eines elektrischen Gerätes genügen jedoch den speziellen Anforderungen bei der Kühlung, Abschirmung und Überwachung einer Radar-Sender-Einheit mit relativ kleinen Abmessungen noch nicht.

Der vorliegenden Erfindung liegt die Aufgabe zugrunde, eine Radar-Sender-Einheit zu schaffen, die eine optimale Abschirmung, Kühlung und Überwachung bei einer räumlich sehr beschränkten Anlage aufweist.

Die Lösung dieser Aufgabe gelingt erfindungsgemäß durch die im kennzeichnenden Teil des Anspruchs 1 angegebenen Maßnahmen.

Weitere vorteilhafte Ausgestaltungen der Erfindung ergeben sich aus den abhängigen Ansprüchen.

Die Erfindung wird nachfolgend unter Bezugnahme auf eine Zeichnung beispielsweise erläutert. Dabei zeigt

Fig. 1 ein Schnittbild des Radar-Senders einer erfindungsgemäßen Radar-Sender-Einheit und

Fig. 2 eine Perspektivdarstellung des Radar-Senders und eines zugehörigen kofferförmigen Gestells.

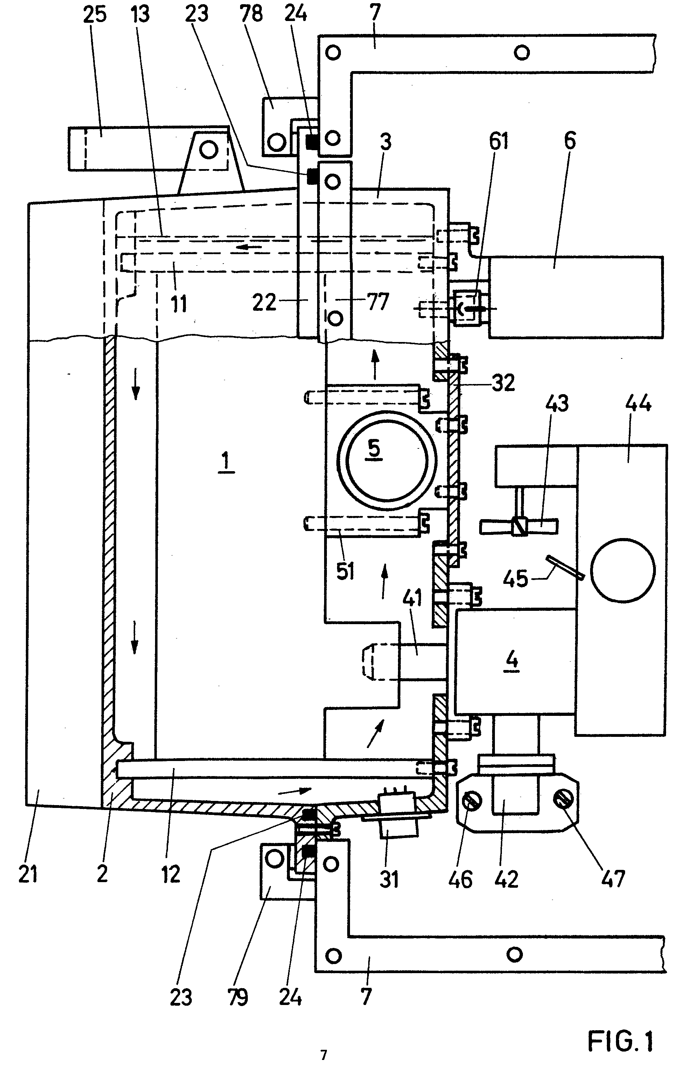

Der in Fig. 1 dargestellte Radar-Sender weist einen Modulator 1 auf, der in einem wannenförmigen Gehäuse 2 mit Kühlrippen 21, vorzugsweise aus Aluminiumguß, untergebracht ist. Dieses Gehäuse 2 ist über einen Flansch 22 mit einem wannenförmigen Deckel 3, ebenfalls aus Aluminiumguß, verschlossen, wobei der Deckel 3 und das Gehäuse 2 eine Kapsel bilden. Der durch den Innenraum des wannenförmigen Deckels 3 erweiterte Innenraum des wannenförmigen Gehäuses 2 ist mit Öl gefüllt. Der Flansch 22 und der Deckel 3 sind miteinander verschraubt; dazwischen ist eine Öldichtung 23 eingefügt. Durch den Deckel 3 führen über eine abgeschirmte, öldichte Durchführung 31 Speise-, Steuer- und Meßleitungen, vorzugsweise über koaxialabgeschirmte eingeschraubte Filter oder über öldichte Stecker mit unmittelbar anschließendem Filter. Der Flansch 22 ist mit einer EMV-Dichtung 24, die zudem noch wasserdicht sein kann, versehen.

Ein Magnetron 4 ist öldicht derart am Deckel 3 befestigt, daß sein Dom 41 durch den Deckel 3 hindurch an einem Hochspannungsstecker des Modulators 1 angeschlossen ist. Das Magnetron 4 ist mit einem Hohlleiterausgang 42 versehen. Da der Stromkreis des Magnetrons 4 innerhalb des im Innenraum zwischen dem Gehäuse 2 und dem Deckel 3 untergebrachten Modulators 1 verläuft, ist er sehr gut abgeschirmt. Auch die aus dem Dom 41 austretenden Mikrowellen sind auf diese Weise abgeschirmt. Das Magnetron 4 ist in bekannter Weise mit einem Ventilator 43 versehen, der an seinem Abstimmgetriebe 44 angebracht ist.

In der Wanne des Deckels 3 ist unmittelbar unterhalb einer Öffnung am Deckel 3 ein Thyratron 5 untergebracht, das sehr leicht erreichbar ist und somit einfach ausgewechselt werden kann. Die Öffnung ist mit einer Abdeckung 32 öldicht verschließbar. Das Thyratron 5 ist an einem Träger 51 befestigt, der einerseits mit Gewindebolzen mit dem Modulator 1 und andererseits mit abgedichteten Schrauben mit der Abdeckung 32 derart verschraubt ist, daß ein guter elektrischer Kontakt gewährleistet ist.

Ein Sende-Trigger ist in einem gesonderten Gehäuse 6 aus Aluminiumguß eingeschlossen und über einen elektrisch gut leitenden Massenkontakt mit dem Deckel 3 verschraubt. Die Auslöseimpulse des Sende-Triggers werden über eine Koaxialleitung mit einem selbststeckenden Koaxialstecker 61 dem Modulator 1 zugeführt. Das nicht im Innenraum zwischen dem Gehäuse 2 und dem Deckel 3 angeordnete Gehäuse 6 liegt auf der Ansaugseite des Ventilators 43 und wird durch diesen gekühlt. Ein Teil des Luftstromes des Ventilators 43 wird durch eine querstehende Lamelle 45 abgezweigt und dient somit auch zur Kühlung des Motors des Abstimmgetriebes 44.

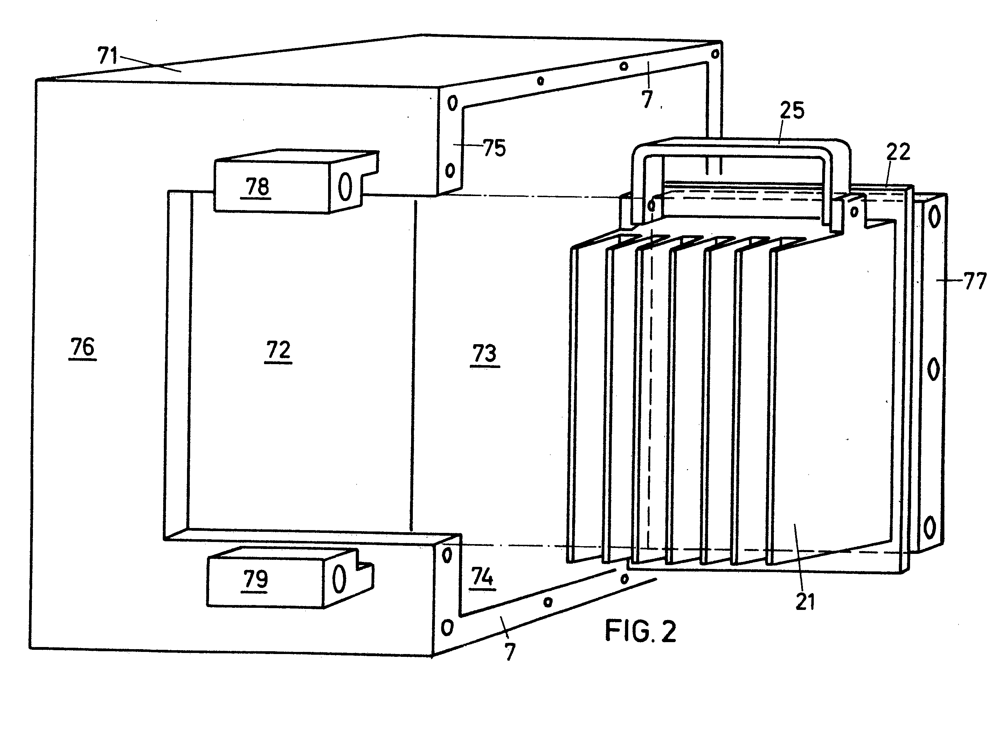

Der Radar-Sender ist in einer Radar-Sender- Einheit (Fig. 2) integriert, welche einen Gestellrahmen 7 aufweist, an dem Abdeckplatten 71, 72, 73, 74 angebracht sind, um ein Gestell zu bilden, das zumindest angenähert eine Kofferform aufweist. An einer Kante 75 dieses Gestells ist der Gestellrahmen 7 mit einem Unterbruch versehen, der etwas länger als die Höhe des Deckels 3 ist und an dem eine Abdeckplatte 76 eine Aussparung aufweist, die etwas breiter als die Tiefe des Deckels 3 ist. Der Deckel 3 des Radar-Senders kann durch diesen Unterbruch in diese Aussparung derart eingefügt werden, daß das Gehäuse 2 fortwährend an der von der mit der Aussparung versehenen Abdeckplatte 76 gebildeten Kofferwand anliegt. Der Deckel 3 ist zudem mit einem Rahmen-Gegenstück 77 versehen, das nach dem Einfügen des Radar-Senders in das Gestell den unterbrochenen Gestellrahmen 7 vervollständigt. Der Radar-Sender kann somit vom vorderen Teil her durch diesen Rahmenunterbruch in die Aussparung eingeführt werden, wodurch auch die Radar-Sender-Einheit eine Kofferform bekommt. Diese Kofferform ist jedoch nicht vollständig, weil das mit Kühlrippen versehene Gehäuse 2 seitlich aus dem Koffer herausragt. Der Flansch 22 und der Koffer sind über die EMV-Dichtung 24 durch Anpraßvorrichtungen 78 und 79 aneinander gepreßt. Der Koffer enthält neben den aus der Zeichnung ersichtlichen Bauteilen noch weitere, zur Radar-Sender-Einheit gehörige Einheiten, die jedoch im Zusammenhang mit der Erfindung nicht von Bedeutung sind.

Der Gestellrahmen 7 ist mit dem Deckel 3 über eine Abdeckplatte verschraubt und wird so mechanisch fixiert und gehalten. Der Modulator 1 ist innerhalb des wannenförmigen Gehäuses 2 und des Deckels 3 derart mit Bolzen 11, 12 und Schrauben an verschiedenen Punkten dieses Gehäuses befestigt, daß das Öl die ganze Oberfläche der Einpackung des Modulators benetzen kann. Das Gehäuse 2 ist mit dem Deckel 3 öldicht verschlossen und braucht keine Expansionsgefäße. Die Ausdehnung des Öls infolge seiner Erwärmung wird durch ein Luftkissen abgefangen, das sich über dem Ölspiegel 13 befindet. Der Innendruck übersteigt dabei keine gefährlichen Grenzen.

Diese Radar-Sender-Einheit funktioniert folgendermaßen: Die Ölkühlung ist so ausgelegt, daß sich die Konvektionsströmung des Öls als geschlossener Kreislauf (siehe Pfeile) entwikkelt, sofern das Gerät mehr oder weniger in Betriebslage arbeitet. Das Magnetron 4 und das Thyratron 5 geben einen Teil ihrer Verlustwärme an den wannenförmigen Deckel 3 und das Öl ab. Das warme Öl steigt daher im Innenraum des wannenförmigen Deckels 3 hinauf und fließt im Innenraum des wannenförmigen Gehäuses 2 in der Nähe der Kühlrippen 21 herunter. Das Magnetron 4 wird zusätzlich durch den Ventilator 43 gekühlt. Über die Verbindung zwischen dem Flansch 22 und dem Rahmengegenstück 77 wird zudem Wärme auf den Gestellrahmen 7 übertragen, wobei dann die Oberfläche des Koffers als zusätzliche Kühlfläche wirkt.

Als maximale Öltemperatur sind 120° C vorge-sehen. Da die Betriebstemperatur des Sende-Triggers bei angenähert 80° C liegt, ist er nicht im Innenraum zwischen dem Gehäuse 2 und dem Deckel 3 angeordnet. Er wird auch durch den Ventilator 43 gekühlt.

Diese Bauweise ermöglicht nun, das Gerät weitgehend mit ungereinigter Kühlluft zu kühlen. Dies ist sehr wichtig, da die Aufbereitung von reiner, staubfreier Luft sehr aufwendig ist. Unter »ungereinigte« Luft wird hier Luft verstanden, deren Rückstände mit den üblichen Reinigungsmitteln usw. entfernt werden können.

Der Radar-Sender kann unter Benützung eines umklappbaren Handgriffes 25 in sehr einfacher Weise herausgezogen werden, nachdem alle Stecker sowie die Anschlußschrauben 46, 47 am Hohlleiterausgang 42 des Magnetrons 4 und die Anpreßvorrichtungen 78, 79 gelöst sind.

Zum Herausnehmen des Magnetrons 4 und des Thyratrons 5 wird der Radar-Sender auf die Kühlrippen 21 gestellt, wodurch das Luftkissen unter den Deckel 3 verschoben wird. Danach werden das Abstimmgetriebe 44 und der Sende-Trigger ausgebaut.

Zum Herausnehmen des im Gehäuse 6 eingebauten Sende-Triggers genügt es, vorzugsweise drei Schrauben am Deckel 3 zu lösen und ihn aus den Selbstanschlußsteckern herauszuziehen.

Zum Herausnehmen des Magnetron-Abstimmgetriebes 44 sind vorzugsweise zwei Schrauben und eine Klemmschraube zu lösen.

Nachdem dann die Schrauben am Magnetronflansch gelöst sind, kann das Magnetron 4 einfach herausgezogen werden. Das Thyratron 5 kann nach Entfernen der Abdeckung 32 am Deckel 3 ebenfalls sehr leicht ausgebaut werden.

**Patentansprüche**

1. Gekühlte Radar-Sender-Einheit mit einem einen Modulator (1), ein Magnetron (4) und ein Thyratron (5) aufweisenden Radar-Sender, gekennzeichnet durch die Gesamtheit der folgenden Merkmale:

a) der Modulator (1) ist im Innenraum einer verschlossenen, Öl enthaltenden Kapsel angeordnet, die durch ein wannenförmiges Gehäuse (2) und einen wannenförmigen Deckel (3) gebildet ist;

b) zur Bildung eines Zwischenraumes für die Konvektionsströmung des Öls ist der Modulator (1) in einem Abstand gegen die inneren Randflächen der Kapsel gehalten, wobei im vom Öl benetzten Innenraum der Kapsel zwischen dem Deckel (3) und dem Modulator (1) der durch eine Öffnung am Deckel (3) öldicht eingeführte Dom (41) des Magnetrons (4) untergebracht ist;

c) weitere Elemente der Radar-Sender-Einheit, darunter das eigentliche Magnetron (4), sind im Innern eines Gestells untergebracht, wobei in einer Seitenwand (76) des Gestells eine Aussparung mit einem Unterbruch im Gestellrahmen (75) vorhanden ist, welcher von einem Rahmen-Gegenstück (77) vervollständigt wird, mit dem der in diese Aussparung eingeführte wannenförmige Deckel (3) derart versehen ist, daß im montierten Zustand das wannenförmige Gehäuse (2) aus dem Gestell herausragt;

d) im Innenraum der Kapsel zwischen dem Deckel (3) und dem Modulator (1) ist unmittelbar vor einer mit einer Abdeckung (32) verschließbaren Öffnung am Deckel (3) das Thyratron (5) in einfach auswechselbarer Weise untergebracht;

e) durch den Deckel (3) sind in an sich bekannter Weise elektrische Leiter über öldichte Durchführungen (31) hindurchgeführt.

2. Radar-Sender-Einheit nach Anspruch 1, dadurch gekennzeichnet, daß der Sende-Trigger in einem gesonderten Gehäuse (6) eingeschlossen und über einen elektrisch leitenden Massenkontakt mit dem Deckel (3) verbunden ist, und daß der Sende-Trigger über eine Koaxialleitung mit einem Koaxialstecker (61) am Modulator (1) verbunden ist.

3. Radar-Sender-Einheit nach Anspruch 1 oder 2, dadurch gekennzeichnet, daß auf dem Magnetron (4) eine Abstimmvorrichtung (44) mit einem Ventilator (43) und einer Lamelle (45) derart eingebaut ist, daß das Magnetron (4), die Abstimmvorrichtung (44) und das Gehäuse (6) des Sende-Triggers zugleich gekühlt werden.

4. Radar-Sender-Einheit nach einem der Ansprüche 1 bis 3, dadurch gekennzeichnet, daß das Gehäuse (2) Kühlrippen (21) aufweist, auf die die Kapsel absetzbar ist.

5. Radar-Sender-Einheit nach einem der Ansprüche 1 bis 4, dadurch gekennzeichnet, daß die Kapsel (2, 3) kofferförmig ausgebildet ist und einen umklappbaren Handgriff (25) aufweist.

## Claims

1. A cooled radar-transmitter unit having a radar transmitter which comprises a modulator (1), a magnetron (4) and a thyratron (5), characterised by the combination of the following features:

a) the modulator (1) is arranged in the interior of a closed capsule which contains oil and which is formed by a trough-like housing (2) and a trough-like cover (3);

b) an interspace to allow convection current flow of the oil is formed by arranging the modulator (1) at a distance from the inner boundary surfaces of the capsule, with the dome (41) of the magnetron (4) leading through an opening in the cover (3) in oil-tight fashion to be accommodated in the oil-washed interior of the capsule between the cover (3) and the modulator (1);

c) further elements of the radar-transmitter unit, including the actual magnetron (4) are accommodated in the interior of a rack, in a side wall (76) of which there is a recess with a break in the rack frame (75), which break is completed by a frame counter-member (77) provided on the trough-like cover (3) and leading into this recess in such manner that in the assembled state the trough-like housing (2) projects out of the rack;

d) the thyratron (5) is arranged in an easily exchangeable manner in the interior of the capsule between the cover (3) and the modulator (1) directly in front of an opening in the cover (3) closed by a cover (32);

e) electric conductors lead through the cover (3) via oil-tight ducts (31) in a manner known per se.

2. A radar-transmitter unit as claimed in Claim 1, characterised in that the transmitting trigger is enclosed in a special housing (6) connected via an electrically conductive earth contact to the cover (3), and that the transmitting trigger is connected via a coaxial line to a coaxial plug (61) on the modulator (1).

3. A radar-transmitter unit as claimed in Claim 1 or 2, characterised in that a tuning device (44) comprising a ventilator (43) and a lamination (45) is installed on the magnetron (4) in such manner that the magnetron (4), the tuning device (44) and the housing (6) of the transmitting trigger are cooled simultaneously.

4. A radar-transmitter unit as claimed in one of the Claims 1 to 3, characterised in that the housing (2) possesses cooling ribs (21) on which the capsule can be set down.

5. A radar-transmitter unit as claimed in ohne of the Claims 1 to 4, characterised in that the capsule (2, 3) is a box-like construction and possesses a folding handle (25).

## Revendications

1. Unité d'émetteur radar refroidie qui comporte un émetteur radar comprenant un modulateur (1), un magnétron (4) et un thyratron (5), caractérisée par la totalité des caractéristiques suivantes:

a) le modulateur (1) est disposé dans l'espace intérieur d'une capsule fermée contenant de l'huile, qui est formée par un boîtier (2) en forme de cuvette et un couvercle (3) en forme de cuvette;

b) pour former un espace intermédiaire pour le courant de convection de l'huile, le modulateur (1) est maintenu à une certaine distance des faces latérales intérieures de la capsule, le dôme (41) du magnétron (4) introduit de façon étanche à l'huile par une ouverture dans le couvercle (3), étant disposé dans l'espace intérieur de la capsule, mouillé par l'huile, entre le couvercle (3) et le modulateur (1);

c) d'autres éléments de l'unité d'émetteur radar, entre autres le magnétron (4) proprement dit, sont logés à l'intérieur d'un châssis-support, un évidement, avec une ouverture dans le bâti (75), existant dans une paroi latérale (76) du châssis-support, évidement qui est complété par une pièce complémentaire de bâti (77) dont est muni le couvercle (3) en forme de cuvette introduit dans cet évidement, de manière que dans l'état assemblé le boîtier (2) en forme de cuvette ressorte du châssis-support;

d) le thyratron (5) est logé de manière à pouvoir être changé facilement, dans l'espace intérieur de la capsule entre le couvercle (3) et le modulateur (1), directement devant une ouverture qui peut être fermée par un chapeau (32);

e) de façon connue en soi, des conducteurs électriques traversent le couvercle (3), par l'intermédiaire de traversées (31) étanches à l'huile.

2. Unité d'émetteur radar suivant la revendication 1, caractérisée par le fait que le déclencheur d'émission est enfermé dans un boîtier distinct (6) et est relié au couvercle (3) par l'intermédiaire d'un contact de masse conducteur du point de vue électrique, et que le déclencheur d'émission est relié à un connecteur coaxial (61) se trouvant sur le modulateur (1), par l'intermédiaire d'une ligne coaxiale.

3. Unité d'émetteur radar suivant la revendication 1 ou 2, caractérisée par le fait qu'un dispositif d'accord (44) comportant un ventilateur (43) et une lamelle (45) est monté sur le magnétron (4), de manière que le magnétron (4), le dispositif d'accord (44) et le boîtier (6) du déclencheur d'émission soient refroidis simultanément.

4. Unité d'émetteur radar suivant l'une des revendications 1 à 3, caractérisée par le fait que le boîtier (2) comporte des ailettes de refroidissement (21) sur lesquelles peut être placée la capsule.

5. Unité d'émetteur radar suivant l'une des revendications 1 à 4, caractérisée par le fait que la capsule (2, 3) présente la forme d'un coffre et comporte une poignée rabattable (25).

FIG.1

FIG.2